# EUROPEAN PATENT SPECIFICATION

(11) **EP 3 094 066 B1**
(45) Date of publication and mention of the grant of the patent: **07.10.2020**
(21) Application number: 14878880.5
(22) Date of filing: 14.01.2014
(51) Int. Cl.: H04L 29/12, H04L 12/66, H04W 8/26, H04W 36/00, H04L 12/24

(54) **NETWORK ADDRESS TRANSLATION METHOD AND APPARATUS**
VERFAHREN UND VORRICHTUNG ZUR NETZWERKADRESSENÜBERSETZUNG
PROCÉDÉ ET APPAREIL DE TRANSLATION D'ADRESSE DE RÉSEAU

(43) Date of publication of application: 16.11.2016
(73) Proprietor: Huawei Technologies Co., Ltd., Longgang District Shenzhen, Guangdong 518129 (CN)
(72) Inventor: PENG, Chenghui, Shenzhen Guangdong 518129 (CN); CHEN, Yuhua, Shenzhen Guangdong 518129 (CN)
(74) Representative: Maiwald Patent- und Rechtsanwaltsgesellschaft mbH
(86) International application number: PCT/CN2014/070610
(87) International publication number: WO 2015/106389

(56) References cited:
- CN-A- 101 193 130
- CN-A- 101 552 745
- CN-A- 101 552 803
- CN-A- 102 164 150
- CN-A- 103 067 534
- US-A1- 2011 310 894
- "Gateway control protocol: IP router packages; H.248.64 (03/13)", ITU-T STANDARD, INTERNATIONAL TELECOMMUNICATION UNION, GENEVA ; CH, no. H.248.64 (03/13), 16 March 2013 (2013-03-16), pages 1-48, XP017578487, [retrieved on 2013-12-05]
- "3rd Generation Partnership Project; Technical Specification Group Services and System Aspects; System improvements for Machine-Type Communications (MTC) (Release 11)", 3GPP DRAFT; 23888-B00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725500, Retrieved from the Internet: URL:http://www.3gpp.org/ftp/tsg_sa/WG2_Arc h/Latest_SA2_Specs/Rel-11/ [retrieved on 2013-07-23]
- GHABOOSI K ET AL: "A Novel Transport Agent for Wireless Routers to Improve TCP and UDP Performance over Wireless Links", PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 4, 11 September 2005 (2005-09-11), pages 2201-2205, XP010928084, DOI: 10.1109/PIMRC.2005.1651836 ISBN: 978-978-38007-2-4
- SALVESTRINI FRANCESCO ET AL: "Towards a Distributed SDN Control: Inter-Platform Signaling among Flow Processing Platforms", 2013 IEEE SDN FOR FUTURE NETWORKS AND SERVICES (SDN4FNS), IEEE, 11 November 2013 (2013-11-11), pages 1-7, XP032540953, DOI: 10.1109/SDN4FNS.2013.6702560 [retrieved on 2014-01-03]

## Description

### TECHNICAL FIELD

The present invention relates to the field of network technologies, and in particular, to a network address translation method and apparatus.

### BACKGROUND

As network technologies develop, to implement fast deployment of a wireless network and improve performance of the wireless network, a concept of wireless SDN (Software Defined Network) is put forward. In the wireless SDN, a control plane and a user plane in a wireless network entity are separated from each other, to implement flexible control on network traffic and provide a favorable platform for innovation of a core network and an application.

"Gateway control protocol: IP router packages"; ITU-T H.248.64 (03/2013), 16 March 2013, pages 1-48, is a recommendation document. Recommendation ITU-T H248.64 has in scope ITU-T H248 media gateways with connection models using only IP-based ITU-T H248 streams/terminations. The different modes of IP packet forwarding (in the ITU-T H248 bear a path) are described. This recommendation further defines an ITU-T H248 package for discriminating such modes and protocol elements for the so-called IP routing forwarding method. Further ITU-T H248 packages provide capabilities for service enhanced packet forwarding with respect to the support of additional network address translation. It is described that this revision clarifies the delivery process of an incoming packet to the ITU-T H248 context/termination/stream to retain consistency with recommendation ITU-T H248.79.

"3rd Generation Partnership Project"; Technical Specification Group Services and System Aspects; System improvements for Machine-Type Communications (MTC) (Release 11)", 3GPP TR 23.888 v11.0.0, 2012-09, is a technical report. It is described that this technical report studies and evaluates architectural aspects of the Systems Improvements for Machine Type Communication requirements specified in TS 22.368. Specifically the following system improvements are considered: architectural enhancements to support a large number of Machine-Type Communication (MTC) devices in the network; architectural enhancements to fulfill MTC service requirements; and support combinations of architectural enhancements for MTC, though not all combinations may be possible.

K. Ghaboosi and B.H. Khalaj; "A Novel Transport for Wireless Routers to Improve TCP and UDP Performance over Wireless Links ", 2005 IEEE 16th International Symposium on personal, Indoor and Mobile Radio Communications, 2201-2205 (2005), describes that by making slight modifications in protocol stack of wireless access points, the proposed CICADA scheme aims at isolating problems related to wireless section of a TCP connection from its wired portion, using IP spoofing and Virtual Protocol Stack scheme. It is described that simulation results for an 802.11 based system show that the proposed scheme improves the overall network throughput while reducing the mean and variance of end-to-end delay for voice and video flows due to smarter bandwidth allocation to elastic and real-time traffic. In addition, the proposed scheme uses a centralised NAT structure that prevents undesired disconnections during handovers and achieves a smaller handoff delay compared with other schemes. US 2011/310894 A1 describes an SDN based address translation system.

To resolve a problem of insufficient IP (Internet Protocol) addresses in a network, a NAT (Network Address Translation) technology is introduced to a wireless SDN network. By using the NAT technology, a private network address in a packet in communication between UE (User Equipment) in the wireless SDN network and an external node may be translated into a public network address, or a public network address is translated into a private network address. In this way, not only the problem of insufficient IP addresses is perfectly resolved, but also an attack from another network can be effectively avoided, so as to hide and protect the UE inside the wireless SDN network.

In a process of implementing the present invention, the inventor finds that the prior art has at least the following problems:

Because UE inside a wireless SDN network is in a moving state, the UE may access different network access devices after movement, and consequently a private network address of the UE inside the wireless SDN network changes. In this case, when the UE communicates with an external node and network address translation is performed on a packet according to the NAT technology, the private network address of the UE cannot be found in a prestored network address translation rule, and query needs to be performed in a management device controller in the wireless SDN network to continue normal communication, thereby reducing communication efficiency and increasing a network burden on the wireless SDN network.

### SUMMARY

To resolve a problem in the prior art, embodiments of the present invention provide a network address translation method and apparatus. In a first aspect, there is provided a network address translation method for when a private network address of user equipment changes as defined in appended claim 1. In a second aspect, there is provided a network address translation apparatus for when a private network address of user equipment changes as defined in appended claim 4. Embodiments are further defined by the dependent claims. The technical solutions are as follows:

A first example provides a network address translation method, where an interface is disposed between a network address translation device and a software defined network controller controller, and the method includes:
receiving, by the network address translation device through the interface, a configuration message sent by the controller, where the configuration message includes a pre-update private network address of user equipment UE and a current private network address of the UE;
if the configuration message includes the pre-update private network address of the UE and the current private network address of the UE, updating, in a network address translation rule, the pre-update private network address of the UE to the current private network address of the UE; ; and
performing address translation, by the network address translation device, on a packet of the UE according to the network address translation rule.

In a first possible implementation manner of the first example, before the receiving, by the network address translation device through the interface, a configuration message sent by the controller, the method further includes:
when the network address translation device receives the packet sent by the UE and does not find, in the network address translation rule, the network address mapping entry corresponding to the UE, sending a network address translation rule request message to the controller, where the request message includes at least the current public network address of the UE.

In a second possible implementation manner of the first example, the updating, in a network address translation rule, the pre-update private network address of the UE to the current private network address of the UE includes:
querying, in the network address translation rule, the network address mapping entry corresponding to the UE; and
updating, in the found network address mapping entry, the pre-update private network address of the UE to the current private network address of the UE.

With reference to the second possible implementation manner of the first example, in a third possible implementation manner, the configuration message further carries a pre-update transport layer identifier of the UE and a current transport layer identifier of the UE; and
accordingly, after the updating, in the found network address mapping entry, the pre-update private network address of the UE to the current private network address of the UE, the method further includes:
updating, in the network address mapping entry corresponding to the UE, the pre-update transport layer identifier of the UE to the current transport layer identifier of the UE.

Beneficial effects of the technical solutions provided in the embodiments of the present invention are as follows:

When determining UE whose translation rule needs to be updated, a controller sends, to a network address translation device through an interface that is preset between the network address translation device and the controller, configuration information generated according to a current private network address of the UE, so that the network address translation device updates the network address translation rule according to the configuration information. Therefore, address translation efficiency of the network address translation device in a wireless SDN network is improved, and a system burden on the controller and a network burden on the wireless SDN network are reduced.

### BRIEF DESCRIPTION OF DRAWINGS

To describe the technical solutions in the embodiments of the present invention more clearly, the following briefly introduces the accompanying drawings
Fig. 1 is a flow chart of a method for network address translation according to a first example.
Fig 2 is a flow chart of a method for network address translation according to a second example.
Fig. 3 is a flowchart of a method for generating configuration information in a network address translation method according to another example.
FIG. 4 is a flowchart of the network address translation method according to another example.
FIG. 5 is a schematic diagram of a signaling direction, in a current system, of the network address translation method according to another example.
FIG. 6 is a schematic diagram of another signaling direction, in a current system, of the network address translation method according to another example.
FIG. 7 is a flowchart of a configuration information generating method in a network address translation method according to another example.
FIG. 8 is a flowchart of the network address translation method according to another example.
FIG. 9 is a schematic structural diagram of a network address translation apparatus according to another example.
FIG. 10 is a schematic structural diagram of a network address translation apparatus according to another example.
FIG. 11 is a schematic structural diagram of a network address translation device according to another example. and
FIG. 12 is a schematic structural diagram of a controller according to another example.

### DESCRIPTION OF EMBODIMENTS

To make the objectives, technical solutions, and advantages of the present invention clearer, the following further describes background examples and embodiments of the present invention in detail with reference to the accompanying drawings. The present invention is defined and limited by the scope of the appended claims. In the following, embodiments not falling within the scope of the appended claims are to be interpreted only as background examples useful for understanding the present invention.

### Embodiment 1

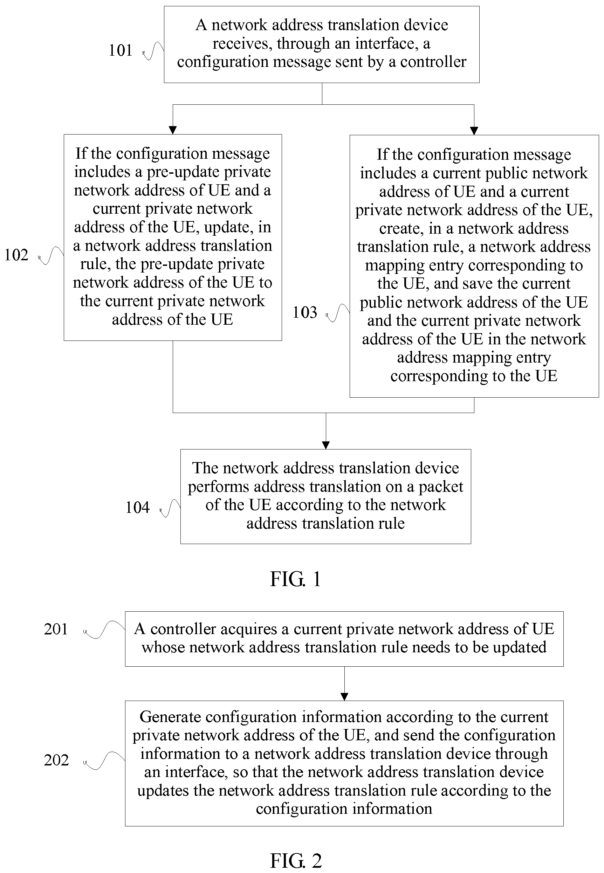

Referring to FIG. 1, this embodiment of the present invention provides a network address translation method.

It should be noted that an interface is disposed between a network address translation device and a controller. When detecting that a private network address of UE changes or receiving a network address translation rule request sent by the network address translation device, the controller sends, to the network address translation device through the interface, a network address translation rule configuration message used for configuring a network address translation rule. The controller negotiates with the network address translation device in advance about disposing the interface. By setting an interface protocol, the two devices may communicate with each other and prepare for configuration of the network address translation rule.

When the UE communicates with an external network by using the private network address, the network address translation device maintains, in units of a session or an IP address, a binding relationship between the private network address and a public network address that are of the UE, or a binding relationship between <private network address + transport layer identifier> and <public network address + transport layer identifier>. This correspondence is stored in the network address translation rule. In the prior art, the network address translation rule stored in the network address translation device is configured in a network or regularly refreshed and cannot be updated in real time. In the present invention, when the UE communicates with an external node and the first packet is transmitted, the network address translation device first sends a network address translation rule request message to the controller, where the request message includes at least a network address on which address translation needs to be performed, or a network address and a transport layer identifier. After receiving a network address translation rule configuration message returned by the controller, the network address translation device generates a corresponding network address translation rule according to session information. Then, when the network address translation device detects an arrival of a packet of the session again, the network address translation device performs translation on address information in the packet according to the NAT rule.

The controller may be an SDN Controller in a wireless SDN network. Referring to FIG. 1,
a process of the method includes the following steps:
101. A network address translation device receives, through an interface, a configuration message sent by a controller, where the configuration message includes a pre-update private network address of user equipment UE and a current private network address of the UE or includes a current public network address of UE and a current private network address of the UE.
102. If the configuration message includes the pre-update private network address of the UE and the current private network address of the UE, update, in a network address translation rule, the pre-update private network address of the UE to the current private network address of the UE.
103. If the configuration message includes the current public network address of the UE and the current private network address of the UE, create, in a network address translation rule, a network address mapping entry corresponding to the UE, and save the current public network address of the UE and the current private network address of the UE in the network address mapping entry corresponding to the UE.
104. The network address translation device performs address translation on a packet of the UE according to the network address translation rule.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 2

This embodiment of the present invention provides a network address translation method.

It should be noted that an interface is disposed between a network address translation device and a controller. When detecting that a private network address of UE changes, the controller sends an update message used for modifying a network address translation rule to the network address translation device through the interface. The controller negotiates with the network address translation device in advance about disposing the interface. By setting an interface protocol, the two devices may communicate with each other and prepare for network address translation.

Referring to FIG. 2, a process of the method includes the following steps:
201. A controller acquires a current private network address of UE whose network address translation rule needs to be updated.
202. Generate configuration information according to the current private network address of the UE, and send the configuration information to a network address translation device through an interface, so that the network address translation device updates the network address translation rule according to the configuration information.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 3

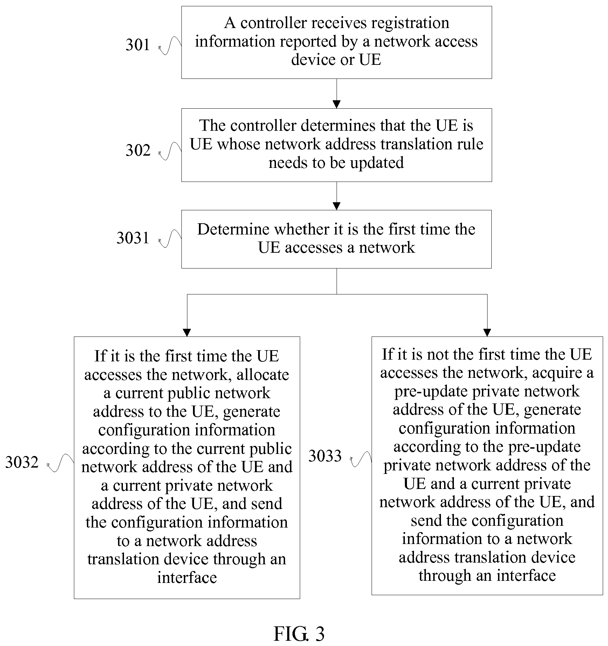

Referring to FIG. 3, this embodiment of the present invention provides a configuration information generating method in a network address translation method.

It should be noted that this embodiment of the present invention is a process in which a controller sends configuration information to a network address translation device after detecting a private network address of UE changes. Cases in which the private network address of the UE changes may be categorized into two types. In the first case, the UE has accessed a current wireless SDN network, and a current change process is to change an allocated private network address of the UE; in the second case, the UE accesses a current wireless SDN network for the first time, and a current change process is to allocate a private network address to the UE for the first time.

A process of the method includes the following steps:
301. A controller receives registration information reported by a network access device or UE, where the registration information carries at least a current private network address of the UE.

In the first case in which the private network address of the UE changes, when a moving area of the UE exceeds a coverage area of a currently accessed first network access device in the wireless SDN network, the UE needs to reselect a network and access the network. In this case, a network access process is performed according to a second network access device that covers a current location. The first network access device and the second network access device may be base stations.

After the UE accesses the second network access device, the private network address registered in the wireless SDN network by the UE is reallocated by the second network access device. In this case, a private network address that is of the UE and in the first network access device becomes invalid, and the second network access device reallocates a new private network address to the UE. In this case, the second network access device or the UE may send the registration information to a management device controller in the wireless SDN network, where the registration information carries at least the current private network address of the UE. The registration information may further carry an identifier of the second network access device that is accessed by the UE.

Preferably, after the UE accesses the second network access device, a transport layer identifier of the UE may also be reallocated by the second network access device. Therefore, configuration information may further carry a current transport layer identifier of the UE, so that a network translation device updates the current transport layer identifier of the UE.

In the second case in which the private network address of the UE changes, the UE accesses the SDN network for the first time, and therefore the registration information carries the current private network address of the UE. In this case, an SDN controller does not find a previous private network address of the UE in a registration information table of the SDN controller according to an identifier of the UE. Therefore, it may be determined that it is the first time the UE accesses the network, and a public network address needs to be allocated to the UE.

Preferably, when the UE accesses the current wireless SDN network, a transport layer identifier may be further allocated to the UE. Therefore, the registration information may further carry a current transport layer identifier of the UE, so that a network translation device updates the current transport layer identifier of the UE.

302. The controller determines that the UE is UE whose network address translation rule needs to be updated.

If the controller receives configuration information sent by the network access device or the UE and obtains the current private network address of the UE by parsing the configuration information, it is confirmed that the private network address of the UE changes, and a process of sending, to the network address translation device, the configuration information used for updating the network address translation rule starts to be performed.

303. The controller generates configuration information according to the current private network address of the UE and sends the configuration information to the network address translation device through an interface.

For the foregoing two cases, the controller needs to determine whether it is the first time the UE accesses the network; if it is the first time the UE accesses the network, allocate a public network address to the UE; if it is not the first time the UE accesses the network, acquire a pre-update private network address of the UE.

Therefore, step 303 may be specifically as follows:
3031. Determine whether it is the first time the UE accesses a network.

A manner of determining whether it is the first time the UE accesses the network may be: performing query in the registration information table of the controller by using the identifier that is of the UE and in the registration information; and if pre-update information of the UE is found in the registration information table, for example, information such as the pre-update private network address of the UE, determining that it is not the first time the UE accesses the network; or if no information of the UE is found, determining that it is the first time the UE accesses the network.

3032. If it is the first time the UE accesses the network, allocate a current public network address to the UE, generate the configuration information according to the current public network address of the UE and the current private network address of the UE, and send the configuration information to the network address translation device through the interface.

Preferably, when the registration information further carries the current transport layer identifier of the UE, step 3032 may further be:
if it is the first time the UE accesses the network, allocating the current public network address to the UE, generating the configuration information according to the current public network address of the UE, the current private network address of the UE, and the current transport layer identifier of the UE, and sending the configuration information to the network address translation device through the interface.

3033. If it is not the first time the UE accesses the network, acquire a pre-update private network address of the UE, generate configuration information according to the pre-update private network address of the UE and the current private network address of the UE, and send the configuration information to the network address translation device through the interface.

For the pre-update private network address of the UE, the pre-update private network address of the UE may be found in the registration information table of the controller according to the identifier that is of the UE and in the configuration information.

Preferably, when the registration information further carries the current transport layer identifier of the UE, step 3033 may further be:
if it is not the first time the UE accesses the network, acquiring the pre-update private network address of the UE and a pre-update transport layer identifier of the UE, generating the configuration information according to the pre-update private network address of the UE, the current private network address of the UE, the pre-update transport layer identifier of the UE, and the current transport layer identifier of the UE, and sending the configuration information to the network address translation device through the interface.

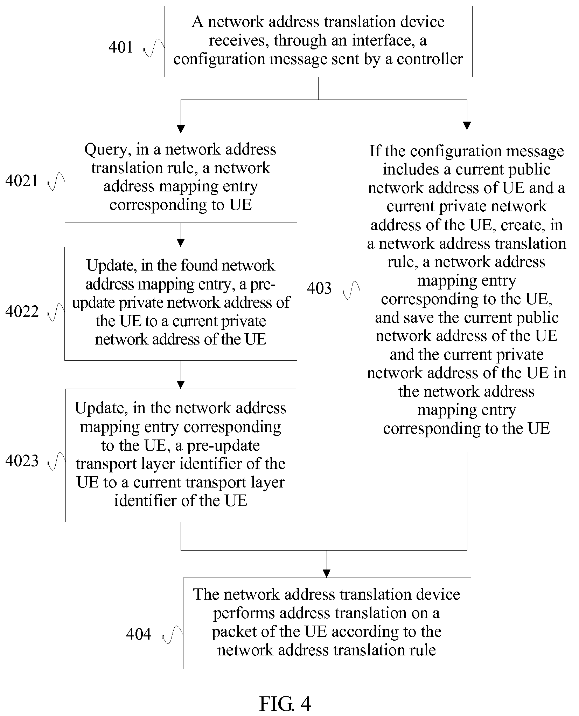

Accordingly, referring to FIG. 4, this embodiment of the present invention provides a network address translation method.

It should be noted that this embodiment of the present invention is a processing process in which a network address translation device updates a network address translation rule after receiving configuration information sent by a controller.

A process of the method includes the following steps:
401. A network address translation device receives, through an interface, a configuration message sent by a controller, where the configuration message includes a pre-update private network address of user equipment UE and a current private network address of the UE or includes a current public network address of UE and a current private network address of the UE.

The configuration information may further include an updated transport layer identifier corresponding to the UE. Preferably, the configuration information may further include an identifier of the UE.

402. If the configuration message includes the pre-update private network address of the UE and the current private network address of the UE, update, in a network address translation rule, the pre-update private network address of the UE to the current private network address of the UE.

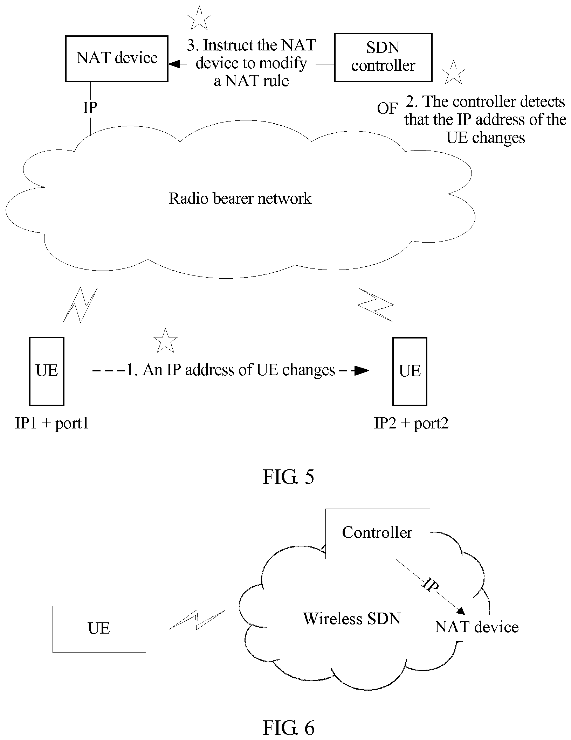

This case is corresponding to the first case in step 301. FIG. 5 shows a signaling direction of the first case in a current system. An IP address of the UE in a first network access device is IP1, and a transport layer identifier is port1. When the UE moves from the first network access device to a network access area of a second network access device, a process in which the UE is deregistered from the first network access device and accesses the second network access device starts to be performed. The second network access device allocates a new IP address IP2 and a new transport layer identifier port2 to the UE. In this case, the UE or the second network access device sends registration information to the controller, where the registration information carries IP2 and port2. The controller generates configuration information according to the registration information and sends, to the network address translation device, the configuration information that carries IP2, IP1, port2, and port1. The network address translation device updates, in the network address translation rule, a network address mapping entry corresponding to the UE.

The network address translation device may directly search the network address translation rule for the pre-update private network address corresponding to the UE, and update the found pre-update private network address corresponding to the UE to an updated private network address that is corresponding to the UE and in the configuration information.

Therefore, a process of step 402 may be specifically as follows:
4021. Query, in the network address translation rule, a network address mapping entry corresponding to the UE.

Specifically, the network address mapping entry corresponding to the UE may be queried in the network address translation rule by using the identifier of the UE.

4022. Update, in the found network address mapping entry, the pre-update private network address of the UE to the current private network address of the UE.

Preferably, when the configuration information received in step 401 further carries a pre-update transport layer identifier of the UE and a current transport layer identifier of the UE, the network address translation device continues to perform a process in step 402 of updating the network address translation rule.

4023. Update, in the network address mapping entry corresponding to the UE, a pre-update transport layer identifier of the UE to a current transport layer identifier of the UE.

403. If the configuration message includes the current public network address of the UE and the current private network address of the UE, create, in a network address translation rule, a network address mapping entry corresponding to the UE, and save the current public network address of the UE and the current private network address of the UE in the network address mapping entry corresponding to the UE.

This case is corresponding to the second case in step 301.

As shown in FIG. 6, the figure shows the second case of a signaling direction of the second case in a current system after the UE accesses a wireless SDN network for the first time. The UE accesses the network for the first time and sends registration information to the controller, where the registration information carries the current private network address and a current transport layer identifier that are of the UE. The controller allocates the current public network address to the UE. The controller generates the configuration message according to the current private network address of the UE, the current public network address of the UE, and the transport layer identifier, and sends the configuration message to the network address translation device. The network address translation device generates, in the network address translation rule, the network address mapping entry corresponding to the UE, and saves the current private network address of the UE, the current public network address of the UE, and the transport layer identifier in the network address mapping entry corresponding to the UE.

Preferably, when the configuration message further carries a current transport layer identifier of the UE, accordingly, after the saving the current public network address of the UE and the current private network address of the UE in the network address mapping entry corresponding to the UE, a process of updating the network address translation rule includes:
saving the current transport layer identifier of the UE in the network address mapping entry corresponding to the UE.

404. The network address translation device performs address translation on a packet of the UE according to the network address translation rule.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 4

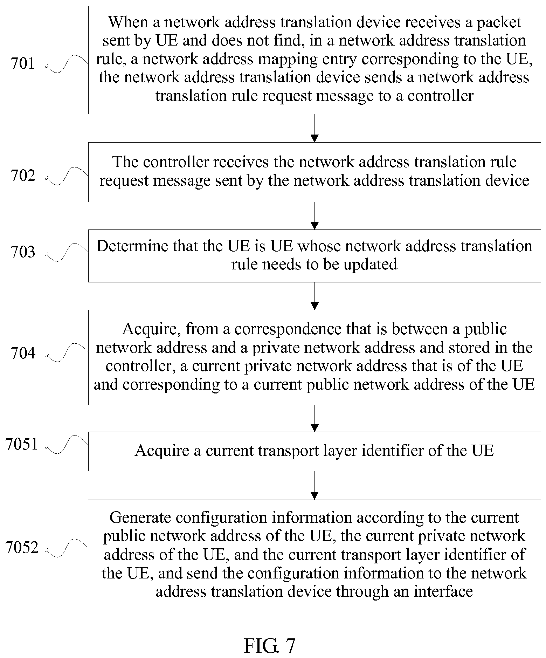

Referring to FIG. 7, this embodiment of the present invention provides a configuration information generating method in a network address translation method.

It should be noted that this embodiment of the present invention is a process in which a network address translation device requests a network address translation rule of UE from a controller after the network address translation device receives a packet of the UE and when the network address translation device does not find the network address translation rule of the UE in a network address translation rule of the network address translation device.

A process of the method includes the following steps:
701. When a network address translation device receives a packet sent by UE and does not find, in a network address translation rule, a network address mapping entry corresponding to the UE, the network address translation device sends a network address translation rule request message to a controller, where the request message includes at least a current public network address of the UE.

702. The controller receives the network address translation rule request message sent by the network address translation device, where the request message includes at least the current public network address of the UE.

703. Determine that the UE is UE whose network address translation rule needs to be updated.

704. Acquire, from a correspondence that is between a public network address and a private network address and stored in the controller, a current private network address that is of the UE and corresponding to the current public network address of the UE.

705. Generate configuration information according to the current public network address of the UE and the current private network address of the UE, and send the configuration information to the network address translation device through an interface.

Preferably, a transport layer identifier of the UE may be further acquired and used to be updated to the network address translation rule. Therefore, step 705 may be specifically as follows:
7051. Acquire a current transport layer identifier of the UE.

7052. Generate the configuration information according to the current public network address of the UE, the current private network address of the UE, and the current transport layer identifier of the UE, and send the configuration information to the network address translation device through the interface.

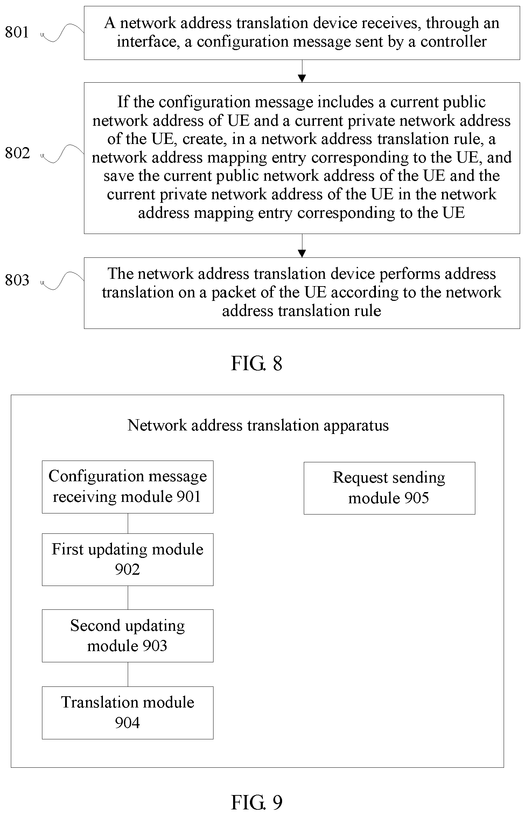

Accordingly, referring to FIG. 8, this embodiment of the present invention provides a network address translation method.

It should be noted that this embodiment of the present invention is a processing process in which a network address translation device updates a network address translation rule after receiving configuration information sent by a controller.

A process of the method includes the following steps:
801. A network address translation device receives, through an interface, a configuration message sent by a controller, where the configuration message includes a current public network address of UE and a current private network address of the UE.

The configuration information may further include an updated transport layer identifier corresponding to the UE. Preferably, the configuration information may further include an identifier of the UE.

802. If the configuration message includes the current public network address of the UE and the current private network address of the UE, create, in a network address translation rule, a network address mapping entry corresponding to the UE, and save the current public network address of the UE and the current private network address of the UE in the network address mapping entry corresponding to the UE.

Preferably, when the configuration message further carries a current transport layer identifier of the UE, accordingly, after the saving the current public network address of the UE and the current private network address of the UE in the network address mapping entry corresponding to the UE, a process of updating the network address translation rule includes:
saving the current transport layer identifier of the UE in the network address mapping entry corresponding to the UE.

803. The network address translation device performs address translation on a packet of the UE according to the network address translation rule.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 5

Referring to FIG. 9, this embodiment of the present invention provides a network address translation apparatus.

An interface is disposed between a network address translation network address translation device and a software defined network controller. The apparatus includes:
a configuration message receiving module 901, configured to receive, through the interface, a configuration message sent by the controller, where the configuration message includes a pre-update private network address of user equipment UE and a current private network address of the UE or includes a current public network address of UE and a current private network address of the UE;
a first updating module 902, configured to: if the configuration message includes the pre-update private network address of the UE and the current private network address of the UE, update, in a network address translation rule, the pre-update private network address of the UE to the current private network address of the UE;
a second updating module 903, configured to: if the configuration message includes the current public network address of the UE and the current private network address of the UE, create, in a network address translation rule, a network address mapping entry corresponding to the UE, and save the current public network address of the UE and the current private network address of the UE in the network address mapping entry corresponding to the UE; and
a translation module 904, configured to perform address translation, by the network address translation device, on a packet of the UE according to the network address translation rule.

The apparatus further includes:
a request sending module 905, configured to: when the network address translation device receives the packet sent by the UE and does not find, in the network address translation rule, the network address mapping entry corresponding to the UE, send a network address translation rule request message to the controller, where the request message includes at least the current public network address of the UE.

The first updating module 902 includes:
a query unit, configured to query, in the network address translation rule, the network address mapping entry corresponding to the UE; and
a first updating unit, configured to update, in the found network address mapping entry, the pre-update private network address of the UE to the current private network address of the UE.

When the configuration message further carries a pre-update transport layer identifier of the UE and a current transport layer identifier of the UE,
accordingly, the first updating module 902 further includes:
a second updating unit, configured to update, in the network address mapping entry corresponding to the UE, the pre-update transport layer identifier of the UE to the current transport layer identifier of the UE.

When the configuration message further carries a current transport layer identifier of the UE,
accordingly, the second updating module 903 is further configured to:
save the current transport layer identifier of the UE in the network address mapping entry corresponding to the UE.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 6

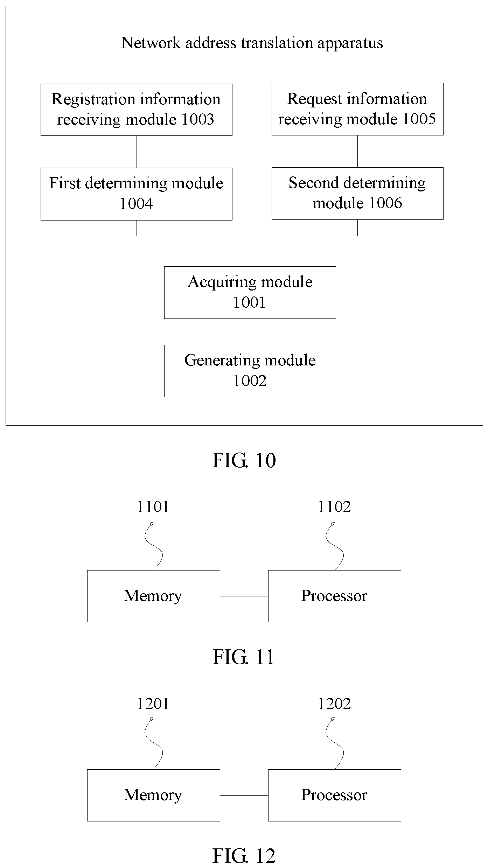

Referring to FIG. 10, this embodiment of the present invention provides a network address translation apparatus.

An interface is disposed between a network address translation network address translation device and a software defined network controller controller. The apparatus includes:
an acquiring module 1001, configured to acquire, by the controller, a current private network address of UE whose network address translation rule needs to be updated; and
a generating module 1002, configured to generate configuration information according to the current private network address of the UE, and send the configuration information to the network address translation device through the interface, so that the network address translation device updates the network address translation rule according to the configuration information.

The apparatus further includes:
a registration information receiving module 1003, configured to receive registration information reported by a network access device or UE, where the registration information carries at least a current private network address of the UE; and
a first determining module 1004, configured to determine that the UE is the UE whose network address translation rule needs to be updated.

Accordingly, the generating module 1002 includes:
a first determining unit, configured to determine whether it is the first time the UE accesses a network; and
a first generating unit, configured to: if it is the first time the UE accesses the network, allocate a current public network address to the UE, generate the configuration information according to the current public network address of the UE and the current private network address of the UE, and send the configuration information to the network address translation device through the interface; or
a second generating unit, configured to: if it is not the first time the UE accesses the network, acquire a pre-update private network address of the UE, generate the configuration information according to the pre-update private network address of the UE and the current private network address of the UE, and send the configuration information to the network address translation device through the interface.

When the registration information further carries a current transport layer identifier of the UE,
the generating module 1002 includes:
a second determining unit, configured to determine whether it is the first time the UE accesses the network; and
a third generating unit, configured to: if it is the first time the UE accesses the network, allocate the current public network address to the UE, generate the configuration information according to the current public network address of the UE, the current private network address of the UE, and the current transport layer identifier of the UE, and send the configuration information to the network address translation device through the interface; or
a fourth generating unit, configured to: if it is not the first time the UE accesses the network, acquire the pre-update private network address of the UE and a pre-update transport layer identifier of the UE, generate the configuration information according to the pre-update private network address of the UE, the current private network address of the UE, the pre-update transport layer identifier of the UE, and the current transport layer identifier of the UE, and send the configuration information to the network address translation device through the interface.

The apparatus further includes:
a request information receiving module 1005, configured to receive a network address translation rule request message sent by the network address translation device, where the request message includes at least a current public network address of UE; and
a second determining module 1006, configured to determine that the UE is the UE whose network address translation rule needs to be updated.

Accordingly, the acquiring module 1001 is configured to:
acquire, from a correspondence that is between a public network address and a private network address and stored in the controller, the current private network address that is of the UE and corresponding to the current public network address of the UE.

The generating module 1002 is specifically configured to:
generate the configuration information according to the current public network address of the UE and the current private network address of the UE, and send the configuration information to the network address translation device through the interface.

The generating module 1002 includes:
an acquiring unit, configured to acquire a current transport layer identifier of the UE; and
a fifth generating unit, configured to generate the configuration information according to the current public network address of the UE, the current private network address of the UE, and the current transport layer identifier of the UE, and send the configuration information to the network address translation device through the interface.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 7

This embodiment of the present invention provides a network address translation device, and an interface is disposed between the network address translation device and a software defined network controller controller.

For a structure of the network address translation device, refer to FIG. 11. The network address translation device includes a memory 1101 and at least one processor 1102, where the processor 1102 is configured to perform the following operations:
receiving, by the network address translation device through the interface, a configuration message sent by the controller, where the configuration message includes a pre-update private network address of user equipment UE and a current private network address of the UE or includes a current public network address of UE and a current private network address of the UE;
if the configuration message includes the pre-update private network address of the UE and the current private network address of the UE, updating, in a network address translation rule, the pre-update private network address of the UE to the current private network address of the UE; or
if the configuration message includes the current public network address of the UE and the current private network address of the UE, creating, in a network address translation rule, a network address mapping entry corresponding to the UE, and saving the current public network address of the UE and the current private network address of the UE in the network address mapping entry corresponding to the UE; and
performing address translation, by the network address translation device, on a packet of the UE according to the network address translation rule.

Before the receiving, by the network address translation device through the interface, a configuration message sent by the controller, the following is further included:
when the network address translation device receives the packet sent by the UE and does not find, in the network address translation rule, the network address mapping entry corresponding to the UE, sending a network address translation rule request message to the controller, where the request message includes at least the current public network address of the UE.

The updating, in a network address translation rule, the pre-update private network address of the UE to the current private network address of the UE includes:
querying, in the network address translation rule, the network address mapping entry corresponding to the UE; and
updating, in the found network address mapping entry, the pre-update private network address of the UE to the current private network address of the UE.

The configuration message further carries a pre-update transport layer identifier of the UE and a current transport layer identifier of the UE.

Accordingly, after the updating, in the found network address mapping entry, the pre-update private network address of the UE to the current private network address of the UE, the method further includes:
updating, in the network address mapping entry corresponding to the UE, the pre-update transport layer identifier of the UE to the current transport layer identifier of the UE.

The configuration message further carries the current transport layer identifier of the UE.

Accordingly, after the saving the current public network address of the UE and the current private network address of the UE in the network address mapping entry corresponding to the UE, the method further includes:
saving the current transport layer identifier of the UE in the network address mapping entry corresponding to the UE.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

### Embodiment 8

This embodiment of the present invention provides a controller, and an interface is disposed between a network address translation device and a software defined network controller controller.

For a structure of the controller, refer to FIG. 12. The controller includes a memory 1201 and at least one processor 1202, where the processor 1202 is configured to perform the following operations:
acquiring, by the controller, a current private network address of UE whose network address translation rule needs to be updated; and
generating configuration information according to the current private network address of the UE, and sending the configuration information to the network address translation device through the interface, so that the network address translation device updates the network address translation rule according to the configuration information.

Before the acquiring, by the controller, a current private network address of UE whose network address translation rule needs to be updated, the method further includes:
receiving registration information reported by a network access device or UE, where the registration information carries at least a current private network address of the UE; and
determining that the UE is the UE whose network address translation rule needs to be updated.

Accordingly, the generating configuration information according to the current private network address of the UE, and sending the configuration information to the network address translation device through the interface includes:
determining whether it is the first time the UE accesses a network; and
if it is the first time the UE accesses the network, allocating a current public network address to the UE, generating the configuration information according to the current public network address of the UE and the current private network address of the UE, and sending the configuration information to the network address translation device through the interface; or
if it is not the first time the UE accesses the network, acquiring a pre-update private network address of the UE, generating the configuration information according to the pre-update private network address of the UE and the current private network address of the UE, and sending the configuration information to the network address translation device through the interface.

The registration information further carries a current transport layer identifier of the UE.

The generating configuration information according to the current private network address of the UE, and sending the configuration information to the network address translation device through the interface includes:
determining whether it is the first time the UE accesses the network; and
if it is the first time the UE accesses the network, allocating the current public network address to the UE, generating the configuration information according to the current public network address of the UE, the current private network address of the UE, and the current transport layer identifier of the UE, and sending the configuration information to the network address translation device through the interface; or
if it is not the first time the UE accesses the network, acquiring the pre-update private network address of the UE and a pre-update transport layer identifier of the UE, generating the configuration information according to the pre-update private network address of the UE, the current private network address of the UE, the pre-update transport layer identifier of the UE, and the current transport layer identifier of the UE, and sending the configuration information to the network address translation device through the interface.

Before the acquiring, by the controller, a current private network address of UE whose network address translation rule needs to be updated, the method further includes:
receiving a network address translation rule request message sent by the network address translation device, where the request message includes at least the current public network address of the UE; and
determining that the UE is the UE whose network address translation rule needs to be updated.

Accordingly, the acquiring, by the controller, a current private network address of UE whose network address translation rule needs to be updated includes:
acquiring, from a correspondence that is between a public network address and a private network address and stored in the controller, the current private network address that is of the UE and corresponding to the current public network address of the UE.

The generating configuration information according to the current private network address of the UE, and sending the configuration information to the network address translation device through the interface includes:
generating the configuration information according to the current public network address of the UE and the current private network address of the UE, and sending the configuration information to the network address translation device through the interface.

The generating the configuration information according to the current public network address of the UE and the current private network address of the UE, and sending the configuration information to the network address translation device through the interface includes:
acquiring a current transport layer identifier of the UE; and
generating the configuration information according to the current public network address of the UE, the current private network address of the UE, and the current transport layer identifier of the UE, and sending the configuration information to the network address translation device through the interface.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

A person of ordinary skill in the art may understand that all or some of the steps of the embodiments may be implemented by hardware or a program instructing related hardware. The program may be stored in a computer-readable storage medium. through the interface.

The generating the configuration information according to the current public network address of the UE and the current private network address of the UE, and sending the configuration information to the network address translation device through the interface includes:
acquiring a current transport layer identifier of the UE; and
generating the configuration information according to the current public network address of the UE, the current private network address of the UE, and the current transport layer identifier of the UE, and sending the configuration information to the network address translation device through the interface.

According to this embodiment of the present invention, when determining UE whose translation rule needs to be updated, a controller sends, to a network address translation device through an interface that is preset between the network address translation device and the controller, configuration information generated according to a current private network address of the UE, so that the network address translation device updates a network address translation rule according to the configuration information. Therefore, address translation efficiency of the network address translation device in a wireless SDN network is improved, and a system burden on the controller and a network burden on the wireless SDN network are reduced.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely exemplary embodiments of the present invention, but are not intended to limit the present invention.

## Claims

1. A network address translation method for when a private network address of user equipment UE changes, wherein the private network address of the UE changes when the UE has accessed a current wireless software defined network SDN and an allocated private network address of the UE is changed, wherein an interface is disposed between a network address translation device and a controller, and the method comprises:
receiving (101), by the network address translation device through the interface, a configuration message sent by the controller, wherein the configuration message comprises a pre-update private network address of the user equipment UE and a current private network address of the UE upon the configuration message comprising the pre-update private network address of the UE and the current private network address of the UE, updating (102), in a network address translation rule, the pre-update private network address of the UE to the current private network address of the UE; and
performing (104) address translation, by the network address translation device, on a packet of the UE according to the network address translation rule;
before the receiving, by the network address translation device through the interface, a configuration message sent by the controller, further comprising:
when the network address translation device receives the packet sent by the UE and does not find, in the network address translation rule, the network address mapping entry corresponding to the UE, sending a network address translation rule request message to the controller, wherein the request message comprises at least the current public network address of the UE; and
wherein the updating, in a network address translation rule, the pre-update private network address of the UE to the current private network address of the UE comprises:
querying, in the network address translation rule, the network address mapping entry corresponding to the UE; and
updating, in the found network address mapping entry, the pre-update private network address of the UE to the current private network address of the UE.

2. The method according to claim 1, wherein the configuration message further carries a pre-update transport layer identifier of the UE and a current transport layer identifier of the UE, and
accordingly, after the updating, in the found network address mapping entry, the pre-update private network address of the UE to the current private network address of the UE, the method further comprises:
updating, in the network address mapping entry corresponding to the UE, the pre-update transport layer identifier of the UE to the current transport layer identifier of the UE.

3. The method according to claim 1, wherein the method further comprises receiving , by the network address translation device through the interface, another configuration message sent by the controller, wherein the another configuration message comprises a current public network address of another UE and a current private network address of the another UE;
and upon the configuration message comprising the current public network address of the another UE and the current private network address of the another UE, creating (103), in a network address translation rule, a network address mapping entry corresponding to the another UE, and saving the current public network address of the another UE and the current private network address of the another UE in the network address mapping entry corresponding to the another UE
wherein the another configuration message further carries a current transport layer identifier of the another UE, and
accordingly, after the saving the current public network address of the another UE and the current private network address of the another UE in the network address mapping entry corresponding to the another UE, the method further comprises:
saving the current transport layer identifier of the another UE in the network address mapping entry corresponding to the another UE.

4. A network address translation apparatus for when a private network address of user equipment UE changes, wherein the private network address of the UE changes when the UE has accessed a current wireless software defined network SDN and an allocated private network address of the UE is changed, wherein an interface is disposed between a network address translation device and a controller, and the apparatus comprises:
a configuration message receiving module (901), configured to receive, through the interface, a configuration message sent by the controller, wherein the configuration message comprises a pre-update private network address of the user equipment UE and a current private network address of the UE;
a first updating module (902), configured to: upon the configuration message comprising the pre-update private network address of the UE and the current private network address of the UE, update, in a network address translation rule, the pre-update private network address of the UE to the current private network address of the UE;
a translation module (904), configured to perform address translation, by the network address translation device, on a packet of the UE according to the network address translation rule;
wherein the apparatus further comprises:
a request sending module (905), configured to: when the network address translation device receives the packet sent by the UE and does not find, in the network address translation rule, the network address mapping entry corresponding to the UE, send a network address translation rule request message to the controller, wherein the request message comprises at least the current public network address of the UE; and
wherein the first updating module comprises:
a query unit, configured to query, in the network address translation rule, the network address mapping entry corresponding to the UE; and
a first updating unit, configured to update, in the found network address mapping entry, the pre-update private network address of the UE to the current private network address of the UE.

5. The apparatus according to claim 4, wherein the configuration message further carries a pre-update transport layer identifier of the UE and a current transport layer identifier of the UE, and
accordingly, the first updating module further comprises:
a second updating unit, configured to update, in the network address mapping entry corresponding to the UE, the pre-update transport layer identifier of the UE to the current transport layer identifier of the UE.

6. The apparatus according to claim 4, wherein the configuration message receiving module is further configured to receive another configuration message sent by the controller, wherein the another configuration message comprises a current public network address of another UE and a current private network address of the another UE;
and the apparatus further comprises a second updating module (903), configured to:upon the another configuration message comprising the current public network address of the another UE and the current private network address of the another UE, create, in a network address translation rule, a network address mapping entry corresponding to the another UE, and save the current public network address of the another UE and the current private network address of the another UE in the network address mapping entry corresponding to the another UE
wherein the another configuration message further carries a current transport layer identifier of the another UE, and
accordingly, the second updating module is further configured to:
save the current transport layer identifier of the another UE in the network address mapping entry corresponding to the another UE.

## Patentansprüche

1. Verfahren zur Netzwerkadressenübersetzung dafür, wenn sich eine private Netzwerkadresse eines Benutzergeräts UE ändert, wobei sich die private Netzwerkadresse des UE ändert, wenn das UE auf eine aktuelle Wireless-Software zugegriffen hat, die durch ein Netzwerk-SDN definiert ist, und eine zugewiesene private Netzwerkadresse des UE geändert wird, wobei eine Schnittstelle zwischen einer Einrichtung zur Netzwerkadressenübersetzung und einer Steuerung angeordnet ist und das Verfahren Folgendes umfasst:
Empfangen (101) einer durch die Steuerung gesendeten Konfigurationsnachricht durch die Einrichtung zur Netzwerkadressenübersetzung über die Schnittstelle, wobei die Konfigurationsnachricht eine private Voraktualisierungsnetzwerkadresse des Benutzergeräts UE und eine aktuelle private Netzwerkadresse des UE umfasst;
wenn die Konfigurationsnachricht die private Voraktualisierungsnetzwerkadresse des UE und die aktuelle private Netzwerkadresse des UE umfasst, Aktualisieren (102) der privaten Voraktualisierungsnetzwerkadresse des UE im Rahmen einer Netzwerkadressenübersetzungsregel auf die aktuelle private Netzwerkadresse des UE; und
Durchführen (104) einer Adressenübersetzung an einem Paket des UE gemäß der Netzwerkadressenübersetzungsregel durch die Einrichtung zur Netzwerkadressenübersetzung;
ferner umfassend vor dem Empfangen einer durch die Steuerung gesendeten Konfigurationsnachricht durch die Einrichtung zur Netzwerkadressenübersetzung über die Schnittstelle:
wenn die Einrichtung zur Netzwerkadressenübersetzung das durch das UE gesendete Paket empfängt und den Netzwerkadressenzuordnungseintrag, der dem UE entspricht, nicht in der Netzwerkadressenübersetzungsregel findet, Senden einer Anforderungsnachricht für eine Netzwerkadressenübersetzungsregel an die Steuerung, wobei die Anforderungsnachricht zumindest die aktuelle öffentliche Netzwerkadresse des UE umfasst; und
wobei das Aktualisieren der privaten Voraktualisierungsnetzwerkadresse des UE im Rahmen einer Netzwerkadressenübersetzungsregel auf die aktuelle private Netzwerkadresse des UE Folgendes umfasst:
Abfragen des Netzwerkadressenzuordnungseintrags, der dem UE entspricht, im Rahmen der Netzwerkadressenübersetzungsregel; und
Aktualisieren der privaten Voraktualisierungsnetzwerkadresse des UE in dem gefundenen Netzwerkadressenzuordnungseintrag auf die aktuelle private Netzwerkadresse des UE.

2. Verfahren nach Anspruch 1, wobei die Konfigurationsnachricht ferner eine Voraktualisierungstransportschichtkennung des UE und eine aktuelle Transportschichtkennung des UE trägt und
das Verfahren dementsprechend nach dem Aktualisieren der privaten Voraktualisierungsnetzwerkadresse des UE in dem gefundenen Netzwerkadressenzuordnungseintrag auf die aktuelle private Netzwerkadresse des UE ferner Folgendes umfasst: Aktualisieren der Voraktualisierungstransportschichtkennung des UE in dem Netzwerkadressenzuordnungseintrag, die dem UE entspricht, auf die aktuelle Transportschichtkennung des UE.

3. Verfahren nach Anspruch 1, wobei das Verfahren ferner Folgendes umfasst: Empfangen einer weiteren durch die Steuerung gesendeten Konfigurationsnachricht durch die Einrichtung zur Netzwerkadressenübersetzung über die Schnittstelle, wobei die weitere Konfigurationsnachricht eine aktuelle öffentliche Netzwerkadresse eines weiteren UE und eine aktuelle private Netzwerkadresse des weiteren UE umfasst;
und wenn die Konfigurationsnachricht die aktuelle öffentliche Netzwerkadresse des weiteren UE und die aktuelle private Netzwerkadresse des weiteren UE umfasst, Erzeugen (103) eines Netzwerkadressenzuordnungseintrags, der dem weiteren UE entspricht, im Rahmen einer Netzwerkadressenübersetzungsregel und Speichern der aktuellen öffentlichen Netzwerkadresse des weiteren UE und der aktuellen privaten Netzwerkadresse des weiteren UE in dem Netzwerkadressenzuordnungseintrag, der dem weiteren UE entspricht,
wobei die weitere Konfigurationsnachricht ferner eine aktuelle Transportschichtkennung des weiteren UE trägt und das Verfahren dementsprechend nach dem Speichern der aktuellen öffentlichen Netzwerkadresse des weiteren UE und der aktuellen privaten Netzwerkadresse des weiteren UE in dem Netzwerkadressenzuordnungseintrag, der dem weiteren UE entspricht, ferner Folgendes umfasst:
Speichern der aktuellen Transportschichtkennung des weiteren UE in dem Netzwerkadressenzuordnungseintrag, der dem weiteren UE entspricht.

4. Vorrichtung zur Netzwerkadressenübersetzung dafür, wenn sich eine private Netzwerkadresse eines Benutzergeräts UE ändert, wobei sich die private Netzwerkadresse des UE ändert, wenn das UE auf eine aktuelle Wireless-Software zugegriffen hat, die durch ein Netzwerk-SDN definiert ist, und eine zugewiesene private Netzwerkadresse des UE geändert wird, wobei eine Schnittstelle zwischen einer Einrichtung zur Netzwerkadressenübersetzung und einer Steuerung angeordnet ist und die Vorrichtung Folgendes umfasst:
ein Konfigurationsnachrichtenempfangsmodul (901), das konfiguriert ist, um eine durch die Steuerung gesendete Konfigurationsnachricht über die Schnittstelle zu empfangen, wobei die Konfigurationsnachricht eine private Voraktualisierungsnetzwerkadresse des Benutzergeräts UE und eine aktuelle private Netzwerkadresse des UE umfasst;
ein erstes Aktualisierungsmodul (902), das zu Folgendem konfiguriert ist: wenn die Konfigurationsnachricht die private Voraktualisierungsnetzwerkadresse des UE und die aktuelle private Netzwerkadresse des UE umfasst, Aktualisieren der privaten Voraktualisierungsnetzwerkadresse des UE im Rahmen einer Netzwerkadressenübersetzungsregel auf die aktuelle private Netzwerkadresse des UE;
ein Übersetzungsmodul (904), das konfiguriert ist, um eine Adressenübersetzung an einem Paket des UE gemäß der Netzwerkadressenübersetzungsregel durch die Einrichtung zur Netzwerkadressenübersetzung durchzuführen;
wobei die Vorrichtung ferner Folgendes umfasst:
ein Anforderungssendemodul (905), das zu Folgendem konfiguriert ist: wenn die Einrichtung zur Netzwerkadressenübersetzung das durch das UE gesendete Paket empfängt und den Netzwerkadressenzuordnungseintrag, der dem UE entspricht, nicht in der Netzwerkadressenübersetzungsregel findet, Senden einer Anforderungsnachricht für eine Netzwerkadressenübersetzungsregel an die Steuerung, wobei die Anforderungsnachricht zumindest die aktuelle öffentliche Netzwerkadresse des UE umfasst; und
wobei das erste Aktualisierungsmodul Folgendes umfasst:
eine Abfrageeinheit, die konfiguriert ist, um den Netzwerkadressenzuordnungseintrag, der dem UE entspricht, im Rahmen der Netzwerkadressenübersetzungsregel abzufragen, und
eine erste Aktualisierungseinheit, die konfiguriert ist, um die private Voraktualisierungsnetzwerkadresse des UE in dem gefundenen Netzwerkadressenzuordnungseintrag auf die aktuelle private Netzwerkadresse des UE zu aktualisieren.

5. Vorrichtung nach Anspruch 4, wobei die Konfigurationsnachricht ferner eine Voraktualisierungstransportschichtkennung des UE und eine aktuelle Transportschichtkennung des UE trägt und
das erste Aktualisierungsmodul dementsprechend ferner Folgendes umfasst:
eine zweite Aktualisierungseinheit, die konfiguriert ist, um die Voraktualisierungstransportschichtkennung des UE in dem Netzwerkadressenzuordnungseintrag, die dem UE entspricht, auf die aktuelle Transportschichtkennung des UE zu aktualisieren.

6. Vorrichtung nach Anspruch 4, wobei das Konfigurationsnachrichtenempfangsmodul ferner konfiguriert ist, um eine weitere durch die Steuerung gesendete Konfigurationsnachricht zu empfangen, wobei die weitere Konfigurationsnachricht eine aktuelle öffentliche Netzwerkadresse eines weiteren UE und eine aktuelle private Netzwerkadresse des weiteren UE umfasst;
und wobei die Vorrichtung ferner ein zweites Aktualisierungsmodul (903) umfasst, das zu Folgendem konfiguriert ist: wenn die weitere Konfigurationsnachricht die aktuelle öffentliche Netzwerkadresse des weiteren UE und die aktuelle private Netzwerkadresse des weiteren UE umfasst, Erzeugen eines Netzwerkadressenzuordnungseintrags, der dem weiteren UE entspricht, im Rahmen einer Netzwerkadressenübersetzungsregel und Speichern der aktuellen öffentlichen Netzwerkadresse des weiteren UE und der aktuellen privaten Netzwerkadresse des weiteren UE in dem Netzwerkadressenzuordnungseintrag, der dem weiteren UE entspricht,
wobei die weitere Konfigurationsnachricht ferner eine aktuelle Transportschichtkennung des weiteren UE trägt und das zweite Aktualisierungsmodul dementsprechend zu Folgendem konfiguriert ist:
Speichern der aktuellen Transportschichtidentkennung des weiteren UE in dem Netzwerkadressenzuordnungseintrag, die dem weiteren UE entspricht.

## Revendications

1. Procédé de translation d'adresse de réseau pour le cas où une adresse de réseau privé d'un équipement utilisateur UE change, dans lequel l'adresse de réseau privé de l'UE change lorsque l'UE a accédé à un réseau logiciel SDN sans fil actuel et une adresse de réseau privé allouée de l'UE est changée, dans lequel une interface est disposée entre un dispositif de translation d'adresse de réseau et un dispositif de commande, et le procédé comprend :
la réception (101), par le dispositif de translation d'adresse de réseau par le biais de l'interface, d'un message de configuration envoyé par le dispositif de commande, dans lequel le message de configuration comprend une adresse de réseau privé de pré-mise à jour de l'équipement utilisateur UE et une adresse de réseau privé actuelle de l'UE
lorsque le message de configuration comprend l'adresse de réseau privé de pré-mise à jour de l'UE et l'adresse de réseau privé actuelle de l'UE, la mise à jour (102), dans une règle de translation d'adresse de réseau, de l'adresse de réseau privé de pré-mise à jour de l'UE en l'adresse de réseau privé actuelle de l'UE ;et
la réalisation (104) d'une translation d'adresse, par le dispositif de translation d'adresse de réseau, sur un paquet de l'UE selon la règle de translation d'adresse de réseau ;
avant la réception, par le dispositif de translation d'adresse de réseau par le biais de l'interface, d'un message de configuration envoyé par le dispositif de commande, comprenant en outre :
lorsque le dispositif de translation d'adresse de réseau reçoit le paquet envoyé par l'UE et ne trouve pas, dans la règle de translation d'adresse de réseau, l'entrée de mappage d'adresse de réseau correspondant à l'UE, l'envoi d'un message de demande de règle de translation d'adresse de réseau au dispositif de commande, dans lequel le message de demande comprend au moins l'adresse de réseau public actuelle de l'UE ; et
dans lequel la mise à jour, dans une règle de translation d'adresse de réseau, de l'adresse de réseau privé de pré-mise à jour de l'UE en l'adresse de réseau privé actuelle de l'UE comprend :
l'interrogation, dans la règle de translation d'adresse de réseau, de l'entrée de mappage d'adresse de réseau correspondant à l'UE ; et
la mise à jour, dans l'entrée de mappage d'adresse de réseau trouvée, de l'adresse de réseau privé de pré-mise à jour de l'UE en l'adresse de réseau privé actuelle de l'UE.

2. Procédé selon la revendication 1, dans lequel le message de configuration achemine en outre un identifiant de couche de transport de pré-mise à jour de l'UE et un identifiant de couche de transport actuel de l'UE, et
en conséquence, après la mise à jour, dans l'entrée de mappage d'adresse de réseau trouvée, de l'adresse de réseau privé de pré-mise à jour de l'UE en l'adresse de réseau privé actuelle de l'UE, le procédé comprend en outre :
la mise à jour, dans l'entrée de mappage d'adresse de réseau correspondant à l'UE, de l'identifiant de couche de transport de pré-mise à jour de l'UE en l'identifiant de couche de transport actuel de l'UE.

3. Procédé selon la revendication 1, dans lequel le procédé comprend en outre la réception, par le dispositif de translation d'adresse de réseau par le biais de l'interface, d'un autre message de configuration envoyé par le dispositif de commande, dans lequel l'autre message de configuration comprend une adresse de réseau public actuelle d'un autre UE et une adresse de réseau privé actuelle de l'autre UE ;
et lorsque le message de configuration comprend l'adresse de réseau public actuelle de l'autre UE et l'adresse de réseau privé actuelle de l'autre UE, la création (103), dans une règle de translation d'adresse de réseau, d'une entrée de mappage d'adresse de réseau correspondant à l'autre UE, et la sauvegarde de l'adresse de réseau public actuelle de l'autre UE et de l'adresse de réseau privé actuelle de l'autre UE dans l'entrée de mappage d'adresse de réseau correspondant à l'autre UE dans lequel l'autre message de configuration achemine en outre un identifiant de couche de transport actuel de l'autre UE, et en conséquence, après la sauvegarde de l'adresse de réseau public actuelle de l'autre UE et de l'adresse de réseau privé actuelle de l'autre UE dans l'entrée de mappage d'adresse de réseau correspondant à l'autre UE, le procédé comprend en outre : la sauvegarde de l'identifiant de couche de transport actuel de l'autre UE dans l'entrée de mappage d'adresse de réseau correspondant à l'autre UE.

4. Appareil de translation d'adresse de réseau pour le cas où une adresse de réseau privé d'un équipement utilisateur UE change, dans lequel l'adresse de réseau privé de l'UE change lorsque l'UE a accédé à un réseau logiciel SDN sans fil actuel et une adresse de réseau privé allouée de l'UE est changée, dans lequel une interface est disposée entre un dispositif de translation d'adresse de réseau et un dispositif de commande, et l'appareil comprend :
un module de réception de message de configuration (901), configuré pour recevoir, par le biais de l'interface, un message de configuration envoyé par le dispositif de commande, dans lequel le message de configuration comprend une adresse de réseau privé de pré-mise à jour de l'équipement utilisateur UE et une adresse de réseau privé actuelle de l'UE ;
un premier module de mise à jour (902), configuré pour : lorsque le message de configuration comprend l'adresse de réseau privé de pré-mise à jour de l'UE et l'adresse de réseau privé actuelle de l'UE, mettre à jour, dans une règle de translation d'adresse de réseau, l'adresse de réseau privé de pré-mise à jour de l'UE en l'adresse de réseau privé actuelle de l'UE ;
un module de translation (904), configuré pour effectuer une translation d'adresse, par le dispositif de translation d'adresse de réseau, sur un paquet de l'UE selon la règle de translation d'adresse de réseau ;
dans lequel l'appareil comprend en outre :
un module d'envoi de demande (905), configuré pour : lorsque le dispositif de translation d'adresse de réseau reçoit le paquet envoyé par l'UE et ne trouve pas, dans la règle de translation d'adresse de réseau, l'entrée de mappage d'adresse de réseau correspondant à l'UE, envoyer un message de demande de règle de translation d'adresse de réseau au dispositif de commande, dans lequel le message de demande comprend au moins l'adresse de réseau public actuelle de l'UE ; et
dans lequel le premier module de mise à jour comprend :
une unité d'interrogation, configurée pour interroger, dans la règle de translation d'adresse de réseau, l'entrée de mappage d'adresse de réseau correspondant à l'UE ; et
une première unité de mise à jour, configurée pour mettre à jour, dans l'entrée de mappage d'adresse de réseau trouvée, l'adresse de réseau privé de pré-mise à jour de l'UE en l'adresse de réseau privé actuelle de l'UE.

5. Appareil selon la revendication 4, dans lequel le message de configuration achemine en outre un identifiant de couche de transport de pré-mise à jour de l'UE et un identifiant de couche de transport actuel de l'UE, et
en conséquence, le premier module de mise à jour comprend en outre :
une seconde unité de mise à jour, configurée pour mettre à jour, dans l'entrée de mappage d'adresse de réseau correspondant à l'UE, l'identifiant de couche de transport de pré-mise à jour de l'UE en l'identifiant de couche de transport actuel de l'UE.

6. Appareil selon la revendication 4, dans lequel le module de réception de message de configuration est en outre configuré pour recevoir un autre message de configuration envoyé par le dispositif de commande, dans lequel l'autre message de configuration comprend une adresse de réseau public actuelle d'un autre UE et une adresse de réseau privé actuelle de l'autre UE ;
et l'appareil comprend en outre un second module de mise à jour (903), configuré pour : lorsque l'autre message de configuration comprend l'adresse de réseau public actuelle de l'autre UE et l'adresse de réseau privé actuelle de l'autre UE, créer, dans une règle de translation d'adresse de réseau, une entrée de mappage d'adresse de réseau correspondant à l'autre UE, et sauvegarder l'adresse de réseau public actuelle de l'autre UE et l'adresse de réseau privé actuelle de l'autre UE dans l'entrée de mappage d'adresse de réseau correspondant à l'autre UE
dans lequel l'autre message de configuration achemine en outre un identifiant de couche de transport actuel de l'autre UE, et en conséquence, le second module de mise à jour est en outre configuré pour :
sauvegarder l'identifiant de couche de transport actuel de l'autre UE dans l'entrée de mappage d'adresse de réseau correspondant à l'autre UE.
